# EUROPÄISCHE PATENTSCHRIFT

(11) **EP 0 422 509 B1**
(45) Veröffentlichungstag und Bekanntmachung des Hinweises auf die Patenterteilung: **23.07.1997**
(21) Anmeldenummer: 90119085.0
(22) Anmeldetag: 04.10.1990
(51) Int. Cl.: B01D 53/00, B01D 5/00, A61L 9/00, F28B 1/00, F28D 20/00

(54) **Verfahren zur Entgasung von Anlagen**
Method for degasing plants
Procédé pour dégazer des installations

(30) Priorität: 09.10.1989 DE 3933716
(43) Veröffentlichungstag der Anmeldung: 17.04.1991
(73) Patentinhaber: HERHOF UMWELTTECHNIK GMBH, D-35606 Solms (DE)
(72) Erfinder:
(74) Vertreter: Gossel, Hans K., Dipl.-Ing.

(56) Entgegenhaltungen:
- WO-A-83/04432
- DE-A- 3 702 013
- US-A- 4 674 561
- US-A- 4 728 341

## Beschreibung

Die Erfindung betrifft ein Verfahren zur Entgasung von Kompostierungsanlagen, aber auch von Kaffeeröstereien, Schokoladenfabriken oder Brauereien.

Die Kompostierung (Rotte) von Abfällen ist ein biologischer Vorgang, der mit Geruchsbildung einhergeht. Das Maß der Geruchsbildung wird weitgehend durch die jeweilige Rottetechnik bestimmt. Allerdings geht mit der Kompostierung grundsätzlich eine Geruchsbildung einher. Quellen für die Geruchsemissionen ergeben sich schon bei der Anlieferung des zu kompostierenden Materials, welches zunächst in Flach- oder Tiefbunkern aufgenommen wird. Geruchsemissionen rühren auch von der Vor- oder Nachrotte und ggf. vom Kompostlager her.

Es ist bekannt, geruchsintensive Gase durch betriebliche oder technische Maßnahmen, wie Wäschersysteme, Kompostfilter o.ä. zu vermindern. Dabei gelingt es bei den bekannten verfahren jedoch nicht, die Geruchsbildung vollständig zu unterdrücken. Somit ist es bei den bekannten Verfahren von Nachteil, daß selbst bei gut funktionierenden Geruchsdesodorierungssystemen immer noch merkliche Geruchseinheiten emittiert werden. Darüberhinaus sind die bekannten Systeme störanfällig und können ausfallen. Zusätzlich besteht das Problem, daß durch unsachgemäße Betriebsführung eine Fehlrotte oder Filterfehlfunktion entsteht, die zu verstärkten Geruchsemissionen führen kann.

Aufgrund der zuvor geschilderten Nachteile hat der Gesetzgeber festgelegt, daß Kompostierungsanlagen nur in einem bestimmten Mindestabstand von geschlossenen Bebauungsgebieten errichtet werden dürfen. Dieser Mindestabstand beträgt in der Regel mehrere hundert Meter, beispielsweise im Bundesland Hessen 500 Meter. Diese gesetzlich vorgeschriebene Mindestabstandsregelung führt aber zu dem ökologischen Mißstand, daß Kompostwerke in sonst unberührter Natur entstehen müssen. Dies bedeutet insbesondere deswegen einen größeren Eingriff, weil auch die gesamte erforderliche Infrastruktur für die Kompostierungsanlage errichtet werden muß, die beispielsweise aus der Stromzuleitung, Abwasserableitungen und verkehrsmäßiger Anbindung besteht.

Es stellt sich daher die Aufgabe, ein Verfahren zur Entgasung von Anlagen, die Abluft mit organischen Bestandteilen emittieren, insbesondere Kompostierungsanlagen, an die Hand zu geben, bei der die Anlage einerseits innerhalb geschlossener Bebauungsgebiete errichtet werden kann und bei dem andererseits eine Geruchsbelästigung innerhalb des Bebauungsgebietes ausgeschlossen wird.

Erfindungsgemäß wird diese Aufgabe ausgehend von dem gattungsgemäßen Verfahren durch die Merkmalskombination des Anspruchs 1 gelöst. Demnach ist die Rohrleitung so bemessen, daß der Mündungspunkt mindestens soweit von der geschlossenen Wohnbebauung liegt, wie es der zuvor erläuterten gesetzlichen Mindestabstandsregelung entspricht bzw. zumindest soweit, daß eine nachteilige Geruchsbelästigung der dem Mündungspunkt zunächst benachbarten Anwohner ausgeschlossen werden kann. Wesentlich ist es, daß die Temperaturdifferenz zwischen der aus der Anlage austretenden heißen Abluft und der Rohrleitung, die unterhalb der Erdoberfläche verlegt ist, zur Entwässerung der Abluft durch Kondensation genutzt wird. Durch diese Entwässerung kann nicht nur ein Großteil der Geruchsstoffe gebunden sondern auch eine Keimbelastung der Abluft entscheidend verringert und eine Tröpfchenverschleppung unterbunden werden.

Das erfindungsgemäße Verfahren erfährt in den Unteransprüchen 2-16 bevorzugte Ausgestaltungen.

Dabei können die geruchsbeladenen Gase ebenerdig über Kamine oder Schornsteine ausgeblasen werden. Alternativ dazu können die Gase an der Mündung über Flächenfilter oder Gaswachsysteme geführt werden.

Vorteilhafterweise können die geruchsbeladenen Gase nach dem Mündungspunkt mit Fremdgasen gemischt und anschließend abgeblasen werden.

Die Gase können auch nach dem Passieren der Rohrleitung in technischen Anlagen weiterbehandelt oder genutzt werden.

Vorteilhaft kann auch unmittelbar hinter der Anlage eine technische oder biologische Gasbehandlung vorgenommen werden, bevor die teilweise von den Geruchsstoffen befreiten Gase über die zuvor genannte Rohrleitung abgeführt werden. Bei dieser bevorzugten Ausführungsform kann die Rohrleitung entsprechend verkürzt werden, da die Konzentration der geruchsbeladenen Stoffe durch die Vorbehandlung entsprechend reduziert werden kann.

Zur Vermeidung einer unerwünschten Kondensatbildung kann die Abluft in der Anlage oder zwischen der Anlage und dem Mündungspunkt entwässert werden.

Gemäß einer weiteren Ausgestaltung der Erfindung können auch nur hier aufgefangenen Gase über die Rohrleitung zur Mündung geführt werden. Andere Betriebsbereiche beispielsweise einer Kompostierungsanlage sind nicht gefaßt und in diesen Bereichen kann das Gas frei emittieren. Dies ist insbesondere dann möglich, wenn in der Kompostierungsanlage Betriebsteile weniger stark geruchsbeladene Gase emittieren, die problemlos unmittelbar in die Umgebung abgelassen werden können. In vorteilhafter Weise können auch mehrere Anlagen oder Anlagenbereiche parallelgeschaltet zwangsentlüftet werden, wobei die Abgase über eine gemeinsame Rohrleitung einen gemeinsamen Mündungspunkt zugeführt werden.

Es ist besonders vorteilhaft, die schon vorhandene Temperaturdifferenz zwischen der Kompostwerksluft und der Rohrleitung zur Entwässerung der Abluft zu nutzen, indem Auskondensieren des Wassers über einen oder mehrere Entwässerungstiefpunkte längs der Rohrleitung erfolgt. Die Entwässerungsteifpunkte können über Siphons entwässert werden, wobei die jeweiligen Siphons vor oder nach dem Kondensatsammelbehälter angeordnet sind. Die Entwässerungstiefpunkte können auch über Rohrleitungen an ein Kanalnetz angeschlossen werden.

Eine besonders vorteilhafte Ausgestaltung des Verfahrens besteht darin, daß die Abluft direkt einer Kläranlage zugeführt wird und hier frei entweichen kann bzw. in eine biologische Reinigungsstufe eingeleitet wird. Damit kann der Rest des Sauerstoffanteils der Rotteabluft noch genutzt werden, indem die Luft feinblasig in das zu klärende Abwasser eingeleitet wird. Dies hat insbesondere den zusätzlichen Vorteil, daß das anfallende Kondensat ebenso unmittelbar in die Kläranlage eingeleitet wird und nicht gesondert abgeführt werden muß.

Gemäß einer weiterhin bevorzugten Verfahrensführung kann der Rotteabluft Wasser- oder Wasserdampf zugesetzt werden, wodurch beim Auskondensieren in der Rohrleitung oder in der Zwangsentwässerung, die unmittelbar der Anlage nachgeschaltet sein kann, darin gebundene Geruchsstoffe angetrennt werden.

Die Abluft kann durch die Rohrleitungen durch eine oder mehrere entlang des Transportweges angeordnete Pumpen gedrückt oder gesaugt werden.

Vorteilhaft ist es weiterhin, in der Rohrleitung oberflächenvergrößernde Elemente, wie Schüttkörper, Lamellen, Leitbleche o.ä., einzubauen. Hierdurch wird die Möglichkeit zur Bildung eines biologischen Rasens gegeben, durch den die Geruchsstoffe in einem solchen Maß vermindert werden. Gleichzeitig können organische Verunreinigungen im aufgefangenen Kondensat abgebaut werden.

Wie eingangs erwähnt kann die organische Abluft beispielsweise aus Kaffeeröstereien, Schokoladenfabriken, Brauereien etc. gemäß der Lehre dieser Erfindung entsorgt werden. Hierzu ist es besonders vorteilhaft, die Abluft mehrerer derartiger Anlagen, die in einem Bebauungsgebiet an verschiedenen Orten stehen, über Rohrleitungen zu einem Sammelpunkt zusammenzuführen und von dort über eine zentrale Rohrleitung zu dem Mündungspunkt zu leiten.

Die eingangs genannte Aufgabe wird erfindungsgemäß durch ein Verfahren Gemäß Anspruch 1 gelöst.

In vorteilhafter Weise ist an den Mündungspunkt der Rohrleitung ein Kamin oder ein Flächenfilter angeschlossen.

Zwischen der Anlage und dem Mündungpunkt kann eine Luftentwässerungsvorrichtung und ggf. eine diese ergänzendes Geruchsfilter angeordnet werden. Die sich an eine Luftentwässerung mit ergänzendem Geruchsfilter anschließende Rohrleitung kann ggf. entsprechend kürzer gehalten werden, da die Geruchsintensität der am Geruchspunkt austretenden Rotteabluft entsprechen geringer ist.

Gemäß einer weiteren bevorzugten Ausführungsform kann die Anlage aus einem eingefaßten Bereich und einem nicht eingefaßten und frei emittierenden Bereich zusammengesetzt sein, wobei diejenigen Anlagenteile frei in die Umgebung emittieren können, die weniger stark geruchsbeladene Abgase emittieren.

In einem weiteren erfindungsgemäßen Verfahren können mehrere Anlagen über ein Rohrleitungssystem einer gemeinsamen Rohrleitung mit einem einzigen Mündungspunkt zugeschaltet werden.

Zur Entwässerung können in der Rohrleitung Entwässerungstiefpunkte vorgesehen sein, die ggf. über diesen zugeordnete Siphons an ein Kanalnetz angeschlossen sind.

In der Rohrleitung können oberflächenvergrößernde Elemente, wie Schüttkörper, Lamellen, Leitbleche etc., eingebaut werden. Diese können mit der Rohrleitung fest verbunden oder aber auch herausnehmbar bzw. entfernbar gestaltet sein.

Es können mehrere Rohrleitungen oder Abluftkanäle parallel geschaltet werden, so daß jeweils eine oder mehrere Kanäle mit Abluft beaufschlagt sind, bis sie aufgeheizt sind. Nach Aufheizen der Kanäle wird der Abluftzustrom abgesperrt, so daß die aufgeheizten Rohre wieder abgekühlt werden können. Die Kanäle können mit einem Material umkleidet sein, das gut wärmeleitend ist. Zwischen den Kanälen kann dabei eine wärmedämmende Sperrschicht vorgesehen werden, die einen Wärmeübergang zwischen dem jeweils betriebenen Abluftkanal und dem zu regenerierenden, d.h. abzukühlenden Kanal, der also gerade nicht mit Abluft beaufschlagt ist, zu unterbinden.

Weitere Einzelheiten und Vorteile der vorliegenden Erfindung werden anschließend anhand mehrerer in der Zeichnung dargestellter Ausführungsbeispiele erläutert. Es zeigen:
- Fig. 1:: Ein erstes Ausführungsbeispiel der vorliegenden Erfindung;
- Fig. 2:: ein zweites Ausführungsform der vorliegenden Erfindung;
- Fig. 3:: ein drittes Ausführungsform der vorliegenden Erfindung;
- Fig. 4:: eine vierte Ausführungsform gemäß der vorliegenden Erfindung zur Entgasung von Kompostierungsanlagen;
- Fig. 5:: eine Parallelschaltung mehrerer Kompostierungsanlagen gemäß der vorliegenden Erfindung,
- Fig. 6:: eine weitere Ausführungsform einer Vorrichtung zur Entgasung einer erfindungsgemäßen Kompostierungsanlage und
- Fig. 7:: einen Schnitt durch eine besondere Ausgestaltung eines Teils einer weiteren Ausführungsform der erfindungsgemäßen Vorrichtung.

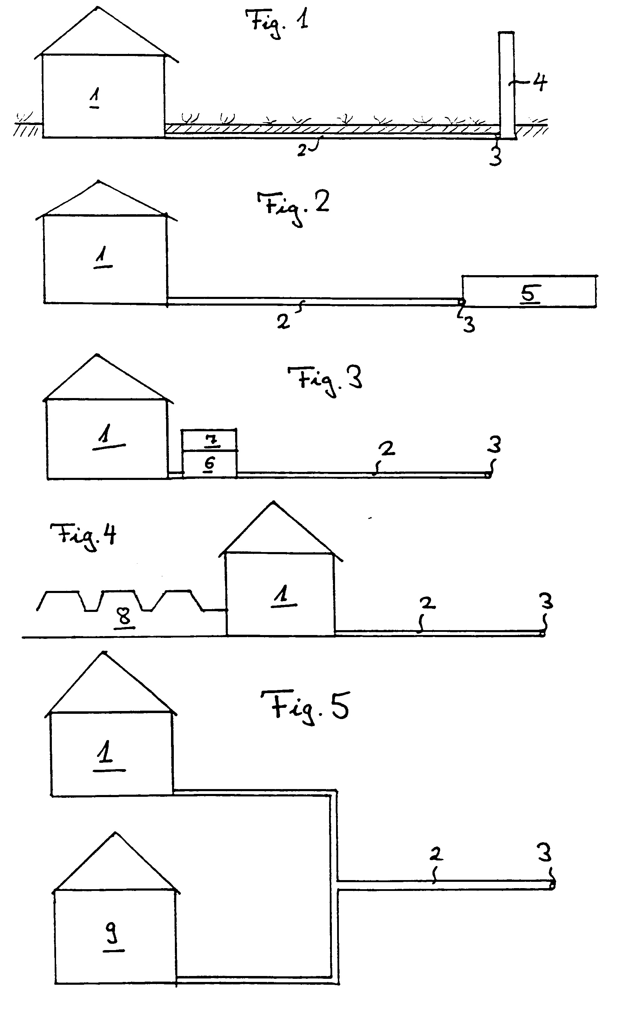

In Fig. 1 ist schematisch die Anlage oder das Kompostwerk 1 dargestellt, in welchem die gesamte Rotteabluft der Anlage gefaßt wird. Die gefaßte Abluft wird über eine Rohrleitung 2 zu einem Mündungspunkt 3 geführt. Die Rohrleitung 2 wird dabei unterhalb der Erdoberfläche geführt, wie dies der Einfachheit halber nur in Figur 1 dargestellt ist. Eine entsprechende Führung der Rohrleitung 2 unterhalb der Erdoberfläche ist allerdings auch in den Ausführungsbeispielen gemäß der Figuren 2 bis 7 gegeben. Die unter der Erdoberfläche verlegte Rohrleitung 2 nimmt die Umgebungstemperatur des Bodens an, wodurch sie auf einem verhältnismäßig konstantem Temperaturniveau gehalten werden kann. Dies ist insbesondere zur Aufrechterhaltung einer möglichst hohen Temperaturdifferenz, welche zur Entwässerung der Abluft genutzt werden kann, notwendig. Die gefaßte Abluft kann mittels Druck- oder Saugpumpen (nicht dargestellt) durch die in der Erde verlaufende Rohrleitung 2 zu dem Mündungspunkt 3 geführt werden. An den Mündungspunkt schließt sich eine Kamin 4 an, über den die Abluft ausgeblasen wird. Die Länge der Rohrleitung ist so bemessen, daß die Abluft von der in einem Bebauungsgebiet liegenden Anlage soweit weggeführt werden kann, daß sie dort nicht mehr zur Geruchsbelästigung führt. Bei der Auslegung der Vorrichtung kann die Länge der Rohrleitung 2 idealerweise auch flexibel an vorhandene gesetzliche Mindestabstandsbestimmungen für die Errichtung von geruchsemittierenden Anlagen angepaßt werden.

In Fig. 2 ist eine Ausführungsvariante dargestellt, bei der an den Mündungspunkt 3 der Rohrleitung 2 ein Flächenfilter 5 als Emissions- bzw. Austrittsstelle anschließt.

In einer Ausführungsform gemäß Fig. 3 ist der Anlage unmittelbar eine Luftentwässerungsvorrichtung nachgeschaltet. Mit der Luftentwässerungsvorrichtung 6 kann unmittelbar noch ein Geruchsfilter 7 gekoppelt sein. Hierdurch wird die Konzentration der Geruchsstoffe entsprechend herabgesetzt. Dadurch kann die nachfolgende Rohrleitung entsprechend kürzer ausgelegt werden, da sich die weniger stark geruchbelasteten Rotteabgase soweit bemerkbar machen.

In Fig. 4 ist eine Ausführungsform dargestellt, bei der nur ein Teil der Kompostierungsanlage defaßt ist. Ein weiterer Bereich 8 kann seine Abluft frei in die unmittelbare Umgebung emittieren.

Die gefaßten Abgase werden entsprechend der vorher geschilderten Ausführungsformen gesammelt und über die Rohrleitung 2 abgeführt.

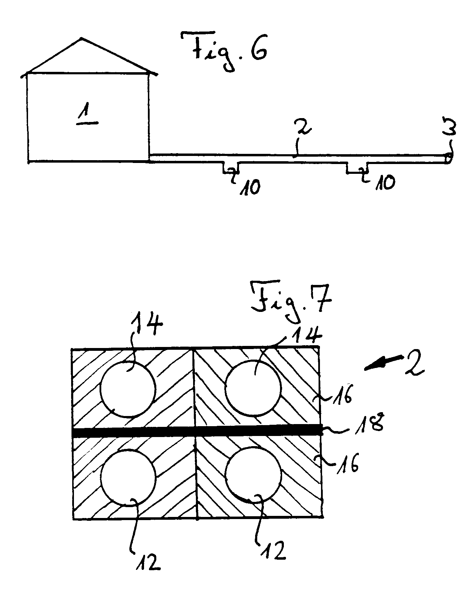

In Fig. 5 ist eine Parallelschaltung von zwei Anlage 1 und 9 gezeigt, deren Abluft durch Rohrleitungen in eine gemeinsame Sammelrohrleitung 2 geführt werden, die zu dem Mündungspunkt 3 führt.

Bei der Ausführungsform gemäß Fig. 6 sind in der Rohrleitung 2 Entwässerungstiefpunkte 10 angeordnet. In diesen Entwässerungstiefpunkten sammelt sich das in der Rohrleitung ausgeschiedene Kondensat. Die Kondensatbildung wird dadurch unterstützt, daß die kompostwarme Abluft in die wesentlich kühlere Rohrleitung 2 geführt wird und das Gas dadurch eine so starke Abkühlung erfährt, daß der mitgeführte Wasserdampf auskondensiert. Das auskondensierte Wasser läuft von selbst zu den Entwässerungstiefpunkten 10 und kann von diesen aus über Siphons abgezogen werden und einem Entwässerungskanalsystem zugeführt werden.

Hier nicht dargestellt ist eine Variante der Erfindung, bei der die Rotteabluft unmittelbar einer Kläranlage zugeführt wird. Dabei kann der Restsauerstoffanteil in vorteilhafter Weise genutzt werden. Hierzu wird die Rotteabluft von dem Mündungspunkt, beispielsweise in einen in einer biologischen Reinigungsstufe der nicht dargestellten Kläranlage angeordneten Disperser (nicht dargestellt) geführt, der die Rotteabluft in kleine Bläschen dispergiert und dadurch die Oberfläche der Rotteabluft entsprechend vergrößert. Durch die so vergrößerte Stoffübergangsfläche kann der in den kleinen Rotteabluftbläschen enthaltene Restsauerstoff in der biologischen Reinigungsstufe vollständig genutzt werden.

In der in Fig. 7 dargestellten Ausführungsform ist eine Rohrleitung 2 durch ein Rohrleitungsbündel aus Rohrleitungen bzw. Abluftkanälen 12 und 14 verwirklicht. Diese Rohrleitungen sind parallel geschaltet. Wechselweise können die Rohrleitungen 12 und die Rohrleitungen 14 mit der heißen Abluft beaufschlagt werden. Beispielsweise werden für den Fall, daß die Rohrleitungen 12 gerade mit heißer Abluft beaufschlagt werden und dadurch aufgeheizt werden, die Rohrleitungen 14 nicht mit Abluft beaufschlagt, so daß sie abkühlen und damit regenerieren können. Nach Aufheizen der Rohrleitungen 12 wird deren Abluftzustrom abgesperrt und der Abluftzustrom der inzwischen ausgekühlten Rohrleitungen 14 wird geöffnet.

Um einen besseren Wärmeübergang zu gewährleisten, sind die Rohrleitungen 12 bzw. 14 mit einem gut wärmeleitenden Material umkleidet. Zwischen den Rohrleitungen 12 bzw. 14 ist eine wärmedämmende Sperrschicht 18 angeordnet, die einen Wärmeübergang zwischen dem jeweils betriebenen Abluftkanal und dem zu regenerierenden, d.h. abzukühlenden Kanal weitestgehend unterbindet.

Bei Entgasung von Kompostierungsanlagen tritt die Kompostwerksabluft mit ca. 60 bis 70° C aus der Anlage aus. Je nach Standort wird der Boden, in welchem die Rohrleitung bzw. das Rohrleitungsbündel 2 geführt wird, im Mittel ca. 13° C kalt sein. Bei Abkühlung auf Umgebungstemperatur der Rohrleitung 2 wird die geruchsbeladene Luft zu ca. 80 % entwässert werden, womit gleichzeitig ein großer Teil der geruchsbeladenen Stoffe mit der wässrigen Phase der Abluft entzogen wird.

## Patentansprüche

1. Verfahren zur Entgasung von Kompostierungsanlagen, Kaffeeröstereien, Schokoladenfabriken oder Brauereien, die mit Wasser beladene Abluft mit organischen Bestandteilen emittieren,
wobei geruchsbeladene Gase der Anlage (1) gefaßt und über eine unterhalb der Erdoberfläche verlegte Rohrleitung (2) zu einem Mündungspunkt (3) fern der Anlage geführt werden, wobei
die Temperaturdifferenz zwischen der aus der Anlage (1) austretenden prozeßwarmen Abluft und der Bodentemperatur aufweisenden Rohrleitung (2) zur Entwässerung der Abluft durch Kondensation genutzt wird, wobei hierdurch der Abluft geruchsbeladene Gase mit der wässrigen Phase entzogen werden, und wobei
die Länge der Rohrleitung (2) so angepaßt wird, daß durch Desodorierung in der Rohrleitung (2) eine Geruchsbelästigung in Wohngebieten ausgeschlossen werden kann.

2. Verfahren nach Anspruch 1,
dadurch gekennzeichnet,
daß die Gase im Auslaß am Mündungspunkt (3) ebenerdig über Kamine oder Schornsteine ausgeblasen werden.

3. Verfahen nach Anspruch 1,
dadurch gekennzeichnet,
daß die Gase am Mündungspunkt über Flächenfilter (5) oder Gaswachsysteme geführt werden.

4. Verfahren nach Anspruch 1,
dadurch gekennzeichnet,
daß die Gase nach dem Mündungspunkt (3) mit Fremdgasen gemischt abgeblasen werden.

5. Verfahren nach einem der Ansprüche 1-4,
dadurch gekennzeichnet,
daß die Gase nach Passieren der Rohrleitung (2) in technischen Anlagen weiterbehandelt oder genutzt werden.

6. Verfahren nach einem der Ansprüche 1-5,
dadurch gekennzeichnet,
daß die Abluft mehrerer Anlagen (1), die Abluft mit unterschiedlichen organischen Bestandteilen emittieren, über Rohrleitungen zu einem Sammelpunkt zusammengeführt werden und von dort aus über die zentrale Rohrleitung (2) zu dem Mündungspunkt (3) geführt werden.

7. Verfahren nach einem der Ansprüche 1-6,
dadurch gekennzeichnet,
daß bei der Entgasung einer Kompostierungsanlage nur Teilbereiche der Kompostierungsanlage (1) gefaßt werden, deren Gasmengen zur Mündung (3) gelangen und daß andere Betriebsbereiche (8) frei emittieren.

8. Verfahren nach einem der Ansprüche 1-7,
dadurch gekennzeichnet,
daß mehrere Anlagen oder Anlagenbereiche zwangsentlüftet werden und daß die entsprechenden Abgase einem gemeinsamen Mündungspunkt (3) zugeführt werden.

9. Verfahren nach einem der Ansprüche 1-8,
dadurch gekennzeichnet,
daß die Entwässerung über einen oder mehrere Entwässerungstiefpunkte (10) längs der Rohrleitung (2) erfolgt.

10. Verfahren nach einem der Ansprüche 1-9,
dadurch gekennzeichnet,
daß die Entwässerungstiefpunkte (10) über Siphons entwässert werden, wobei der Siphon jeweils vor oder nach dem Kondensatsammelbehälter angeordnet sein kann.

11. Verfahren nach einem der Ansprüche 1-10,
dadurch gekennzeichnet,
daß Abluftmengen aus unterschiedlichen Bereichen des Kompostwerkes (1) getrennt gefaßt, getrennt desodoriert und anschließend gemeinsam dem Mündungspunkt (3) zugeführt werden.

12. Verfahren nach einem der Ansprüche 1-11,
dadurch gekennzeichnet,
daß die Abluft unmittelbar einer Kläranlage zugeführt wird und hier frei entweichen.

13. Verfahren nach einem der Ansprüche 1-12,
dadurch gekennzeichnet,
daß die Abluft unmittelbar einer Kläranlage zugeführt und dort in eine biologische Reinigungsstufe eingeleitet wird.

14. Verfahren nach einem der Ansprüche 1-13,
dadurch gekennzeichnet,
daß der Kompostwerksabluft Wasser- oder Wasserdampf in einem Maße zugesetzt wird, daß beim Auskondensieren in der Rohrleitung (2) oder bei der Zwangsentwässerung (6) in der Kompostwerksabluft gebundene Geruchsstoffe abgetrennt werden.

15. Verfahren nach einem der Ansprüche 1-14,
dadurch gekennzeichnet,
daß die Abluft durch die Rohrleitung (2) durch eine oder mehrere längs des Transportweges angeordnete Pumpen gedrückt oder gesaugt wird.

16. Verfahren nach einem der Ansprüche 1-15,
dadurch gekennzeichnet,
daß die Abluft über in der Rohrleitung (2) angeordneten oberflächenvergrößernden Elementen, wie Schüttkörper, Lamellen, Leitblechen u.ä., geführt werden.

## Claims

1. Method for degassing composting plants, coffee roasting plants, chocolate factories or breweries, which emit water-laden waste air comprising organic constituents, odour-laden gases from the plant (1) being captured and fed via a pipeline (2) laid beneath the surface of the earth to an outlet point (3) situated remote from the plant, the temperature difference between the process-heated waste air emerging from the plant (1) and the pipeline (2) which is at ground temperature, being used to dewater the waste air by condensation, in which process odour-laden gases are removed from the waste air together with the aqueous phase, and the length of the pipeline (2) being adapted such that odour pollution in residential areas can be precluded by deodorization in the pipeline (2).

2. Method according to Claim 1, characterized in that the gases in the discharge at the outlet point (3) at ground level are blown out via chimneys or stacks.

3. Method according to Claim 1, characterized in that the gases at the outlet point are guided over sheet filters (5) or gas monitoring systems.

4. Method according to Claim 1, characterized in that the gases are blown off downstream of the outlet point (3) together with foreign gases.

5. Method according to one of Claims 1-4, characterized in that the gases are treated further or utilized in industrial plants after passing through the pipeline (2).

6. Method according to one of Claims 1-5, characterized in that the waste air from a plurality of plants (1), which emit waste air having different organic constituents, is brought together via pipelines to a collection point and, from there, fed to the outlet point (3) via the central pipeline (2).

7. Method according to one of Claims 1-6, characterized in that, during the degassing of a composting plant, only partial regions of the composting plant (1) are captured, the quantities of gas from which pass to the outlet (3), and in that other operating regions (8) emit freely.

8. Method according to one of Claims 1-7, characterized in that a plurality of plants or plant regions are subjected to forced exhaust ventilation and in that the corresponding waste gases are fed to a common outlet point (3).

9. Method according to one of Claims 1-8, characterized in that the dewatering is carried out by means of one or more dewatering wells (10) along the pipeline (2).

10. Method according to one of Claims 1-9, characterized in that the dewatering wells (10) are dewatered by means of syphons, it being possible in each case for the syphon to be arranged upstream or downstream of the condensate collection container.

11. Method according to one of Claims 1 to 10, characterized in that quantities of waste air from different regions of the composting works (1) are captured separately, deodorized separately and then together fed to the outlet point (3).

12. Method according to one of Claims 1-11, characterized in that the waste air is fed directly to a sewage treatment plant, where it can escape freely.

13. Method according to one of Claims 1-12, characterized in that the waste air is fed directly to a sewage treatment plant, where it is passed to a biological treatment stage.

14. Method according to one of Claims 1-13, characterized in that water or steam is added to the composting works waste air in an amount which is such that odorous substances bound in the composting works waste air are separated off during condensation in the pipeline (2) or during the forced dewatering (6).

15. Method according to one of Claims 1-14, characterized in that the waste air is forced or sucked through the pipeline (2) by one or more pumps arranged along the transportation path.

16. Method according to one of Claims 1-15, characterized in that the waste air is guided over elements arranged in the pipeline (2) which increase the surface area, such as bulk bodies, lamellae, baffle plates and the like.

## Revendications

1. Procédé pour l'évacuation des gaz d'installations de compostage, d'installations de torréfaction de café, de fabriques de chocolat ou de brasseries, qui émettent de l'air vicié chargé en eau et en composants organiques,
dans lequel les gaz chargés en odeur sont confinés dans l'installation (1) et sont transportés jusqu'à un point d'évacuation (3) éloigné de l'installation, par une conduite (2) posée en dessous de la surface du sol,
la différence de température entre l'air vicié chaud de traitement quittant l'installation (1) et la conduite (2) présentant la température du sol étant utilisée pour la séparation, par condensation, de l'eau contenue dans l'air vicié, de sorte que les gaz chargés en odeurs de l'air vicié sont extraits avec la phase aqueuse, et dans lequel
la longueur de la conduite (2) est adaptée de manière à pouvoir, par désodorisation dans la conduite (2), exclure une pollution de zones d'habitat par les odeurs.

2. Procédé selon la revendication 1, caractérisé en ce que les gaz sortant au niveau du sol au point d'évacuation (3) sont évacués par une cheminée.

3. Procédé selon la revendication 1, caractérisé en ce qu'au point d'évacuation, les gaz sont passés sur des surfaces de filtration (5) ou des systèmes de lavage de gaz.

4. Procédé selon la revendication 1, caractérisé en ce qu'après le point d'évacuation (3), les gaz sont évacués après mélange avec des gaz étrangers.

5. Procédé selon l'une des revendications 1 à 4, caractérisé en ce qu'après être passés dans la conduite (2), les gaz sont encore traités ou utilisés dans des installations techniques.

6. Procédé selon l'une des revendications 1 à 5, caractérisé en ce que l'air vicié provenant de plusieurs installations (1), qui émettent de l'air vicié présentant différents composants organiques, est rassemblé à l'aide de conduites en un point de collecte, et de là est amené au point d'évacuation (3) par la conduite centrale (2).

7. Procédé selon l'une des revendications 1 à 6, caractérisé en ce que dans le cadre de l'évacuation des gaz d'une installation de compostage, seules des parties de l'installation de compostage (1) sont confinées et les quantités de gaz qu'elles produisent sont amenées à l'évacuation (3), d'autres zones de production (8) émettant librement.

8. Procédé selon l'une des revendications 1 à 7, caractérisé en ce que plusieurs installations ou parties d'installations sont dotées d'une ventilation forcée, et en ce que les gaz viciés correspondants sont amenés à un point d'évacuation commun (3).

9. Procédé selon l'une des revendications 1 à 8, caractérisé en ce que l'évacuation de l'eau contenue s'effectue par l'intermédiaire d'un ou plusieurs points bas d'évacuation d'eau (10) situés le long de la conduite (2).

10. Procédé selon l'une des revendications 1 à 9, caractérisé en ce que les points bas d'évacuation d'eau (10) sont vidangés par l'intermédiaire de siphons, le siphon pouvant être disposé aussi bien avant qu'après le récipient de collecte des condensats.

11. Procédé selon l'une des revendications 1 à 10, caractérisé en ce que les quantités d'air vicié provenant de différentes zones de l'usine de compostage (1) sont confinées séparément, désodorisées séparément et ensuite amenées en commun au point d'évacuation (3).

12. Procédé selon l'une des revendications 1 à 11, caractérisé en ce que l'air vicié est amené directement à une installation d'épuration, pour s'y échapper librement.

13. Procédé selon l'une des revendications 1 à 12, caractérisé en ce que l'air vicié est amené directement à une installation d'épuration, où il est introduit dans une étape d'épuration biologique.

14. Procédé selon l'une des revendications 1 à 13, caractérisé en ce que l'on ajoute à l'air vicié de l'usine de compostage de l'eau ou de la vapeur d'eau en quantité telle que lors de leur séparation par condensation dans la conduite (2) ou lors de la séparation forcée de l'eau (6), les matières odorantes liées à l'air vicié de l'usine de compostage sont séparées.

15. Procédé selon l'une des revendications 1 à 14, caractérisé en ce que l'air vicié est refoulé ou pompé dans la conduite (2) par une ou plusieurs pompes disposées le long du parcours de transport.

16. Procédé selon l'une des revendications 1 à 15, caractérisé en ce que l'air vicié passe sur des éléments d'agrandissement de la surface, tels qu'entre autres des corps en vrac, des lamelles, des chicanes, disposés dans la conduite (2).
